# EUROPEAN PATENT SPECIFICATION

(11) **EP 2 860 599 B1**
(45) Date of publication and mention of the grant of the patent: **01.03.2017**
(21) Application number: 14179280.4
(22) Date of filing: 31.07.2014
(51) Int. Cl.: G05B 19/05, G06F 3/0488

(54) **Control device with PLC programmable logic controller and with a touchscreen**
Steuerungsvorrichtung mit PLC Speicherprogrammierbarer Steuerung und mit einem Berührungsbildschirm
Dispositif de commande avec un contrôleur à logique programmable PLC et avec un écran tactile

(30) Priority: 02.08.2013 CN 201310335773
(43) Date of publication of application: 15.04.2015
(73) Proprietor: Rockwell Automation Control Solutions (HARBIN) Co., Ltd., Harbin 150081, Heilongjiang (CN)
(72) Inventor: Liu, Changjiang, 150081 Harbin Heilongjinang (CN); Wu, Zhuoli, 150081 Harbin Heilongjinang (CN); Chi, Huiguang, 150081 Harbin Heilongjinang (CN); Shi, Yanshuang, 150081 Harbin Heilongjinang (CN)
(74) Representative: Grünecker Patent- und Rechtsanwälte PartG mbB

(56) References cited:
- EP-A2- 2 731 004
- WO-A1-97/39392
- DE-A1- 10 118 909
- DE-U1- 20 104 685
- US-A1- 2010 141 596

## Description

### FIELD OF THE INVENTION

The present disclosure relates to the field of industrial automatic control, and in particular to a control device and a control system for a converter.

### BACKGROUND OF THE INVENTION

This section provides background information relating to the present disclosure, which is not necessarily a prior art.

As high-voltage variable-frequency speed regulating devices advance and upgrade, control systems employing closed-loop control of the high-voltage converters continue to improve in their performance. In the field of industrial control, e.g., in a constant-pressure water supply or air supply system, often the user requires a better closed-loop control capacity of the high-voltage variable-frequency speed regulating system, in order to achieve automatic control and regulation. Accordingly, the requirement of the closed-loop control performance of the high-voltage variable-frequency speed regulating device has been raised.

A touchscreen is a new programmable control terminal, which can provide a human-machine interface. Touchscreens can be used in on-site control; they are highly reliable, easy to program, and convenient to use and maintain. Using a touchscreen where technical parameters are many and human-machine interaction is needed can significantly enhance the function of automatic control of the entire production.

PLC (Programmable Logic Controller) has the features including high calculation speed, extensive instructions, powerful function, high reliability, easy to use, flexible programming and good anti-interference capability. With the continuous progress of science and technology, all industries are imposing a higher requirement on the degree of automation; and using modern automatic control techniques plays an important role in reducing labor intensity, optimizing production process, increasing productivity and lowering production cost.

Therefore, it is desirable to provide a control device and a control system for a converter that incorporate both the touchscreen and PLC, which can achieve a better closed-loop control capability and thus meet user requirements.

DE 101 18 909 A1 discloses a control system for equipment and parts of equipment, especially electric motors, which has operator elements in form of surface zones of touch-sensitive film. In the solution disclosed by DE 101 18 909 A1, an equipment control arrangement has a central control (SPS) which drives a number of consumer loads individually. The operator elements are designed as surface zones of a touch-sensitive film which outputs a signal which is representative for the point at which contact is made with the touch-sensitive film. A decoding logic unit stores the boundaries of the surface zones and to which the output signal of the touch-sensitive film is supplied and provides an output signal in which the address of the associated consumer load is contained. A bus-circuit prepares the decoding logic output signal for further processing by the central control (SPS) via the field-bus.

DE 201 04 685 U1 discloses a monitoring and control system for large scaled mobile equipment, such as large cranes, construction vehicles, and heavy-duty vehicles, with a control and a visualization level, wherein at the control level one or more vendor-independent programmable control units in the form of programmable logic controllers (PLC units) that are linked using a standard bus system are provided and wherein, at the visualization level, a computer system with a screen which is connected to the standard bus is provided.

### SUMMARY OF THE INVENTION

It is therefore the object of the present invention to provide an improved control device for a converter and a corresponding control system.

This object is solved by the subject matter of the independent claims.

Preferred embodiments are defined by the dependent claims.

This section provides a general summary of the present disclosure, and is not a comprehensive disclosure of its full scope or all of its features.

An object of the present disclosure is to provide a control device and a control system for a converter that incorporate both a touchscreen and PLC, can achieve a good closed-loop control capability, and thus meet user requirements.

According to an aspect of the present disclosure, there is provided a control device for a converter, including: a touchscreen adapted to provide a human-machine interface; a communication adapter plate connected to the touchscreen, the touchscreen communicating with the communication adapter plate using a first communication protocol; and a PLC control device adapted to control the converter, the PLC control device being connected to the communication adapter plate and communicating with the communication adapter plate using a second communication protocol that is different from the first communication protocol.

According to another aspect of the present disclosure, there is provided a control system, including: a control device according to the present disclosure; a converter controlled by the control device; an actuating mechanism controlled by the converter to actuate control of a controlled object; and a sensor adapted to sense the controlled object and transmit a resulting sensing signal to a PLC control device in the control device.

In the control device and the control system for a converter according to the present disclosure, the touchscreen and the PLC control device using different communication protocols are connected by the communication adapter plate. Thus, even if commercially available touchscreen products and PLC products use different communication protocols, they can be connected to achieve a good closed-loop control capability and thus meet user requirements.

Further areas of applicability will become apparent from the description provided herein. The description and specific examples in this summary are intended for purposes of illustration only and are not intended to limit the scope of the present disclosure.

### BRIEF DESCRIPTION OF THE DRAWINGS

The drawings described herein are for illustrative purposes only of selected embodiments and not all possible implementations, and are not intended to limit the scope of the present disclosure. In the drawings:
Figure 1 is a block diagram illustrating a control system known by the inventors of the present disclosure;
Figure 2 is a block diagram illustrating a control system according to an embodiment of the present disclosure;
Figure 3 is a block diagram illustrating a communication adapter plate in the control system shown in Figure 2;
Figure 4 is a block diagram illustrating a control system according to another embodiment of the present disclosure; and
Figure 5 is a block diagram illustrating a communication adapter plate in the control system shown in Figure 4.

While the present disclosure is susceptible to various modifications and alternative forms, specific embodiments thereof have been shown by way of example in the drawings and are herein described in detail. It should be understood, however, that the description herein of specific embodiments is not intended to limit the present disclosure to the particular forms disclosed, but on the contrary, the intention is to cover all modifications, equivalents, and alternatives falling within the spirit and scope of the present disclosure. Note that corresponding reference numerals indicate corresponding parts throughout the several views of the drawings.

### DETAILED DESCRIPTION OF THE INVENTION

Examples of the present disclosure will now be described more fully with reference to the accompanying drawings. The following description is merely exemplary in nature and is not intended to limit the present disclosure, application, or uses.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The technology of variable-frequency speed regulation herein refers to a technology of stepless speed regulation for an AC motor, which has been widely used in speed control fields such as constant-pressure water supply and constant-pressure air supply due to its unique and excellent control performance. In water supply industry, for example, due to the special needs of production safety and water quality, constant pressure of water supply is strictly required, which leads to intensive application of the technology of variable-frequency speed regulation.

In supplying water by a pumping station, the technology of variable-frequency speed regulation can be used to maintain a constant water pressure. The control system can be switched between manual and automated operations; and automated switching between the multiple pumps is supported. The system has sleep and wake-up functions. When external use of water stops, the system is put into a sleep state and then will be automatically waked up once there is a water use request. The system can adjust PID parameters online, and has such functions as pump set and line protection, alert, and signal display.

While the pumping station is at work, the actual pressure in the pipe network will be feedback and compared with a given pressure. When the pressure in the pipe network is insufficient, the converter increases its output frequency, which speeds up the pump, increases water supply and causes the pressure in the pipe network to increase. On the other hand, if the pressure in the pipe network is too high, the speed of the pump can be slowed down, the water supply will decrease, and the pressure in the pipe network will drop, thereby achieving constant-pressure water supply.

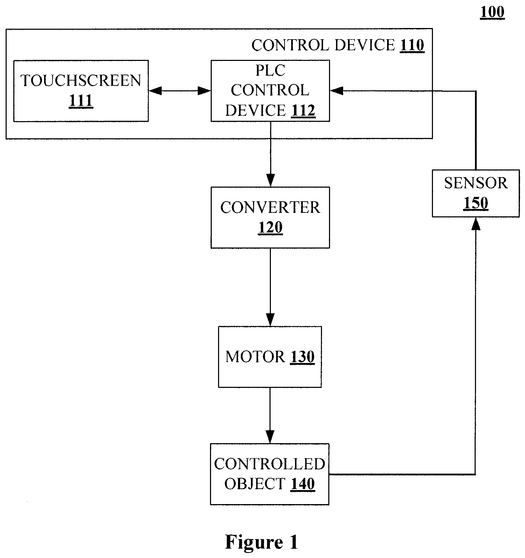

Figure 1 illustrates a control system 100 known by the inventors of the present disclosure, which is not necessarily a prior art.

As shown in Figure 1, the control system 100 may include a control device 110, a converter 120, a motor 130 that is an actuating mechanism, and a sensor 150. The control system 100 may control a controlled object 140. The controlled object 140 may include, for example, a water pumps or a fan.

The control device 110 may further include a touchscreen 111 and a PLC control device 112.

The touchscreen 111 may provide a human-machine interface, so as to display in real time operating status of the device and the system. In addition, the touchscreen 11 may transmit an instruction or data to the PLC control device 112 through touch, and then control the system or device through the PLC control device 112. The touchscreen 111 may include multiple monitoring views so as to substitute conventional electrical operating panels as well as display and recording instruments, and may have more powerful functions.

The PLC control device 112 is the core of the control system. The PLC control device 112 may acquire various data of the system and make conversion between analog signals and digital signals, and may perform calculation for logic control and PID regulation of the whole system. In addition, the PLC control device 112 may provide the touchscreen 111 with the acquired data and processed data, and may execute various instructions initiated by the touchscreen 111. Furthermore, the PLC control device 112 may convert the resulting data of PID calculations into an analog signal as a control signal regulating the output frequency of the converter 120.

The converter 120 is controlled by the PLC control device 112. Specifically, some internal parameters of the converter 120 may be set by the touchscreen 111 through the PLC control device 112, and the converter 120 may adjust the speed of a water pump or a fan according to data (analog signal) from the PLC control device 112.

The motor 130 which is an actuating mechanism is controlled by the converter 120, to actuate control of the controlled object 140 such as a water pump or a fan.

The sensor 150 may sense the controlled object 140, and may transmit a resulting sensing signal to the PLC control device 112.

Specifically, the sensor 150 may be a pressure (or flow) sensor, and convert the sensing result into a current signal ranging from 4 to 20 mA, which is fed to the PLC control device 112. The PLC control device 112 may compare a given value set by the touchscreen 111 with the actual value acquired by the PLC control device 112. That is, according to a set voltage (or flow) value corresponding to a constant-voltage (or constant-flow) state and the fed-back current signal acquired from the pressure (or flow) sensor 150, the PLC control device 112 may automatically regulate and change the frequency output of the converter 120 based on PID control.

In other words, using the touchscreen and PLC in a closed-loop control variable-frequency system allows the operator to directly set in the touchscreen a target value (pressure, temperature, etc.), which is used by the PLC to be compared with an actual value (measured by the sensor), so that a calculated instruction (analog signal) is sent directly to the variable-frequency system, thereby regulating the output frequency of the converter. The converter controls the controlled object through the motor. The PLC may monitor in real time the magnitude of a parameter of the controlled object as well as a plurality of parameters in the converter, to realize such functions as alerts and recording.

However, currently commercially-available touchscreen products and PLC products are generally equipped with their own communication protocol interfaces. The communication protocol used by a touchscreen product (first communication protocol) being different from the communication protocol used by a PLC product (second communication protocol) limits the user's choice.

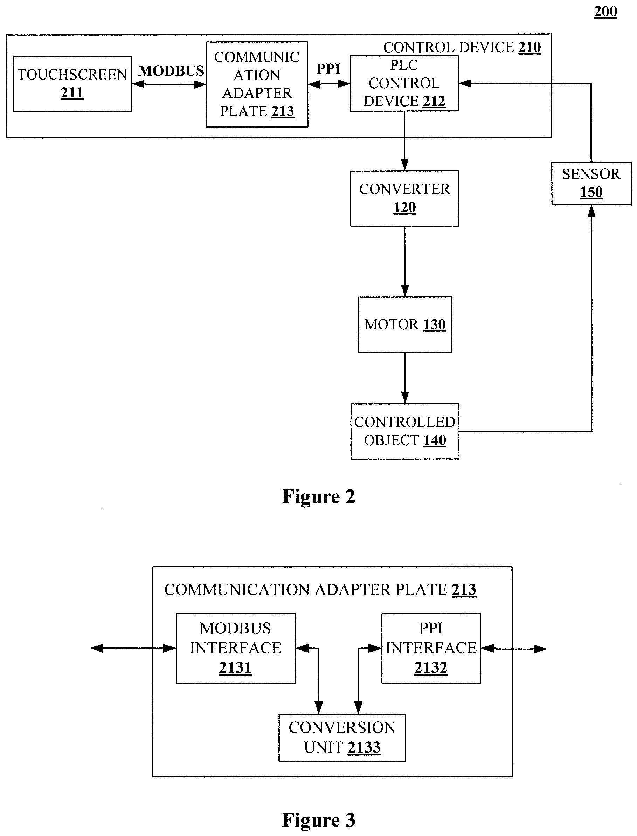

In order to allow the user to make a choice flexibly from touchscreen products and PLC products according to his/her needs without the limitation caused by the communication protocols, the inventors of the present disclosure modifies the control system 100 shown in Figure 1, and proposes a control system 200 shown in Figure 2.

In the control system 200 according to the embodiment of the present disclosure, the control device 210 differs from the control device 110 shown in Figure 1; but the other components are substantially the same as those shown in Figure 1, detailed description of which will therefore be omitted.

The control device 210 may include a touchscreen 211, a communication adapter plate 213, and a PLC control device 212.

The touchscreen 211 may be used to provide a human-machine interface, which corresponds to the touchscreen 111 shown in Figure 1.

The communications adapter plate 213 is connected to the touchscreen 211. The touchscreen 211 communicates with the communication adapter plate 213 using a first communication protocol. In this embodiment, the first communication protocol may be MODBUS, but is not limited thereto.

The PLC control device 212 may be used to control the converter 120. The PLC control device 212 is connected to the communication adapter plate 213, and communicates with the communication adapter plate 213 using a second communication protocol that is different from the first communication protocol. In this embodiment, the second communication protocol may be PPI (Point to Point Interface), but is not limited thereto.

Thus, the user has the flexibility to choose a touchscreen 211 using a first communication protocol such as MODBUS and a PLC control device 212 using a second communication protocol such as PPI, incorporate them to achieve a good closed-loop control capability, and thus meet user requirements.

Due to the presence of the separate communication adapter plate 213, which has the function to make conversion between different communication protocols, this solution can isolate the protocol conversion function from the other functions, simplifying the design and function implementation.

Figure 3 illustrates the communication adapter plate 213 in the control system 200 of Figure 2 in detail. As shown in Figure 3, the communication adapter plate 3 may include a MODBUS interface (first interface) 2131, a PPI interface (second interface) 2132, and a conversion unit 2133.

The MODBUS interface 2131 may, using MODBUS (first communication protocol), receive a signal from the touchscreen 211 or transmit a signal (first signal) to the touchscreen 211.

The PPI interface 2132 may, using PPI (second communication protocol), receive a signal from the PLC control device 212 or transmit a signal (second signal) to the PLC control device 212.

The conversion unit 2133 may convert the first signal into the second signal or convert the second signal into the first signal.

Specifically, the touchscreen 211 equipped with an interface for MODBUS may transmit a signal to the MODBUS interface 2131, and then the MODBUS interface 2131 may transmit the received signal to the conversion unit 2133. Upon receipt of the signal in MODBUS format from the MODBUS interface 2131, the conversion unit 2133 converts the signal into a signal in PPI format, and then transmits the resulting converted signal to the PPI interface 2132. Upon receipt of the signal in PPI format from the conversion unit 2133, the PPI interface 2132 transmits the signal to the PLC control device 212 equipped with an interface for PPI. This realizes the transmission of a signal from the touchscreen 211 to the PLC control device 212.

Correspondingly, the PLC control device 212 equipped with the interface for PPI may transmit a signal to the PPI interface 2132, and then the PPI interface 2132 may transmit the received signal to the conversion unit 2133. Upon receipt of the signal in PPI format from the PPI interface 2132, the conversion unit 2133 converts the signal into a signal in MODBUS format, and then transmits the resulting converted signal to the MODBUS interface 2131. Upon receipt of the signal in MODBUS format from the conversion unit 2133, the MODBUS interface 2131 transmits the signal to the touchscreen 211 equipped with the interface for MODBUS. This realizes the transmission of a signal from the PLC control device 212 to the touchscreen 211.

As can be seen from the above, the communication adapter plate can connect and convert communications in numerous protocols, so that signal communication is realized between the touchscreen and the PLC control device. Processing the protocols separately would require increased hardware and cost. In the embodiment of the present disclosure, the communication adapter plate processes the protocols integrally, which saves the hardware and cost.

Furthermore, the inventers of the present disclosure found that, the control function of the PLC control device can be divided into external signal processing and internal core processing when the PLC control device is used to control a converter. In the control system 100 shown in Figure 1 and the control system 200 shown in Figure 2, only one sensor 150 is shown. However, an actual high-voltage variable-frequency speed-regulating device often includes a plurality of sensors. Numerous external signals are to be input into the PLC control device for external signal processing. Based on the result of external signal processing, the PLC control device performs precise calculation and thereby perform precise control of the converter (i.e., internal core processing).

In practice, the number, type and sensing signals of those sensors may change according to different application scenarios. In order to comply with the different external signals, the PLC control device has to be modified to meet different user requirements.

However, the inventers of the present disclosure found that, the modification to the PLC control device normally relates only to the external signal processing, while it is seldom for the internal core processing of the PLC control device to be substantially changed. Therefore, dividing the PLC control device in the hardware aspect according to the external signal processing and internal core processing would simplify the modification to the PLC control device and lower the cost.

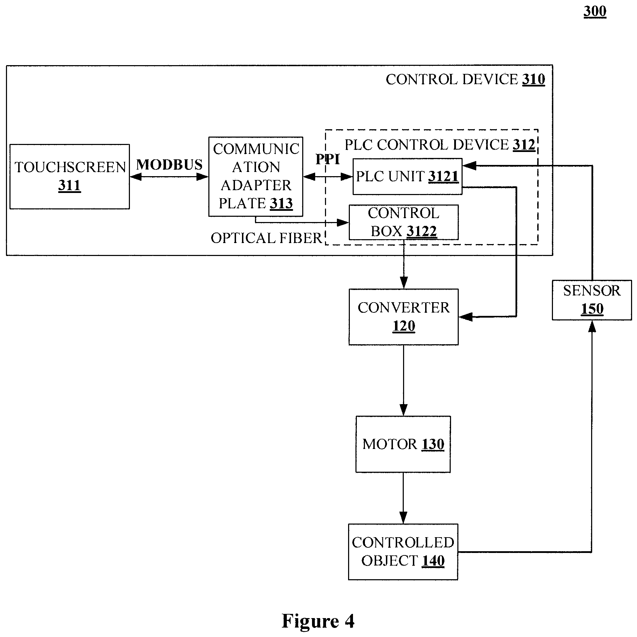

Figure 4 illustrates a control system 300 according to another embodiment of the present disclosure. The control device 310 differs from the control device 210 shown in Figure 2; but the other components are substantially the same as those shown in Figure 2, detailed description of which will therefore be omitted.

The control device 310 may include a touchscreen 311, a communication adapter plate 313, and a PLC control device 312.

The touchscreen 311 may be used to provide a human-machine interface, which corresponds to the touchscreen 211 shown in Figure 2.

The communications adapter plate 313 is connected to the touchscreen 311. The touchscreen 311 communicates with the communication adapter plate 313 using a first communication protocol. In this embodiment, the first communication protocol may be MODBUS, but is not limited thereto.

The PLC control device 312 may be used to control the converter 120. The PLC control device 312 is connected to the communication adapter plate 313, and communicates with the communication adapter plate 313 using a second communication protocol that is different from the first communication protocol. In this embodiment, the second communication protocol may be PPI, but is not limited thereto.

The PLC control device 312 may include a PLC unit 3121 and a control box 3122. The PLC unit 3121 may be connected to the communication adapter plate 313, communicate with the communication adapter plate 313 using the second communication protocol (PPI), and perform external control on the converter 120. The control Box 3122 may be connected to the communication adapter plate 313 and perform internal control on the converter 120.

The PLC unit 3121 may receive a sensing signal from an external sensor 150. The PLC unit 3121 processes the external signal. The control box 3122 performs core calculation. The external signal is processed by the PLC unit 3121, and then is transmitted by communication to the control box 3122 for internal core processing, in order to achieve precise control of the converter 120. The control box 3122 is not equipped with many interfaces, and therefore the PLC unit is required to connect and process the external signal and then transmit the result by communication.

The control box is the core for the converter, and most important data are calculated and processed therein so that the converter can operate. Important programming, hardware (circuit board) developing, and stability and precision calculation can be performed in the control box.

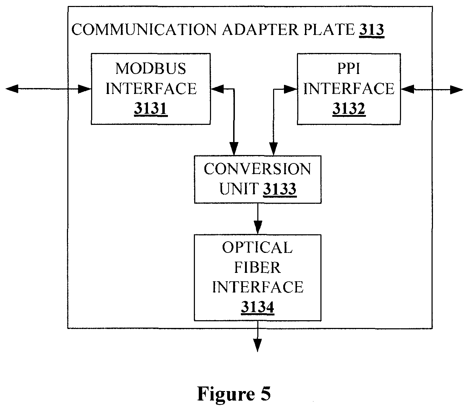

Figure 5 illustrates the communication adapter plate 313 in the control system 300 shown in Figure 4 in detail. As shown in Figure 5, the communication adapter plate 313 may include a MODBUS interface (first interface) 3131, a PPI interface (second interface) 3132, a conversion unit 3133, and an optical fiber interface (third interface) 3134.

The MODBUS interface 3131 may, using MODBUS (first communication protocol), receive a signal from the touchscreen 111 or transmit a signal (first signal) to the touchscreen 311.

The PPI interface 3132 may, using PPI (second communication protocol), receive a signal from the PLC unit 3121 or transmit a signal (second signal) to the PLC unit 3121.

The conversion unit 3133 may convert the first signal into the second signal or convert the second signal into the first signal.

The optical fiber interface 3134 may selectively transmit the conversion result by the conversion unit 3133 to the control box 3122.

Specifically, the touchscreen 311 equipped with an interface for MODBUS may transmit a signal to the MODBUS interface 3131, and then the MODBUS interface 3131 may transmit the received signal to the conversion unit 3133. Upon receipt of the signal in MODBUS format from the MODBUS interface 3131, the conversion unit 3133 converts the signal into a signal in PPI format, and then transmit the resulting converted signal to the PPI interface 3132. Upon receipt of the signal in PPI format from the conversion unit 3133, the PPI interface 3132 transmits the signal to the PLC unit 312 equipped with an interface for PPI. This realizes the transmission of a signal from the touchscreen 311 to the PLC unit 3121.

Correspondingly, the PLC unit 3121 equipped with the interface for PPI may transmit a signal to the PPI interface 3132, and then the PPI interface 3132 may transmit the received signal to the conversion unit 3133. Upon receipt of the signal in PPI format from the PPI interface 3132, the conversion unit 3133 converts the signal into a signal in MODBUS format, and then transmit the resulting converted signal to the MODBUS interface 3131. Upon receipt of the signal in MODBUS format from the conversion unit 3133, the MODBUS interface 3131 transmits the signal to the touchscreen 311 equipped with the interface for MODBUS. This realizes the transmission of a signal from the PLC unit 3121 to the touchscreen 311.

On the other hand, the PLC unit 3121 may receive a sensing signal from an external sensor 150, and perform external signal processing on the received sensing signal. Based on the results of external signal processing, the PLC unit 3121 may perform external control on the converter 120. The external control can be considered as preliminary control of the converter 120.

Further, the PLC unit 3121 may transmit the result of external processing to the control box 3122. Specifically, according to control related requirements, the PLC unit 3121 may transmit the signal to the PPI interface 3132 in the communication adapter plate 313. The PPI interface 3132 may transmit the received signal to the conversion unit 3133. Then, the conversion unit 3133 may further transmit the signal to the optical fiber interface 3134, and the optical fiber interface 3134 may transmit the signal to the control box 3122 via an optical fiber. The benefits of using optical fiber include fast communication speed, and a large amount of high-speed signals in a short time, which prevents signal delay. As a matter of course, other communication manners may be used according to the user's requirements, and the present disclosure is not limited thereto.

Furthermore, the touchscreen 311 may transmit a user instruction to the control box 3122. Specifically, according to the user's requirements, the touchscreen 311 may transmit a signal to the MODBUS interface 3131 in the communication adapter plate 313. The MODBUS interface 3131 may transmit the received signal to the conversion unit 3133. Then, the conversion unit 3133 may transmit the signal to the optical fiber interface 3134, and the optical fiber interface 3134 may transmit the signal to the control box 3122 via an optical fiber.

Upon receipt of the signal from the touchscreen 311 and/or the PLC unit 3121, the control box 3122 may perform core calculation, so as to achieve internal control of the converter 120. The internal control can be considered as precise control of the converter 120.

The closed-loop system of the high-voltage variable-frequency speed-regulating device according to the present disclosure is achieved based on the PLC unit, control views on the touchscreen, and core calculation by the control box which results in a more stable and reliable closed-loop function. In addition, filtering in the acquisition process of the closed-loop system can reduce false operations of the device caused by disturbing signals. Software parameter setting can realize flexible control of the closed-loop function.

The practical applications in constant-pressure water supply or air supply systems illustrate that, based on the external PLC unit and touchscreen and the internal control box as well as PLC related software programming, perfect closed-loop control of the high-voltage variable-frequency speed-regulating device can be achieved, thereby enabling the high-voltage variable-frequency speed-regulating device to be developed rapidly in an excellent direction.

The converter according to the embodiments of the present disclosure may be a high-voltage converter, but the present disclosure is not limited thereto.

The control system according to the embodiments of the present disclosure may be a constant-pressure water supply system or a constant-pressure air supply system, but the present disclosure is not limited thereto.

The embodiments of the present disclosure is described in detail in conjunction with the accompanying drawings; however, it shall be understood that the embodiments herein is for illustrative purposes only and shall not limit the scope of the present disclosure. For those skilled in the art, various modifications and alternations can be made to the above embodiments without departing from the scope of the present disclosure. Therefore, the scope of the present disclosure shall defined by the appended claims and the equivalent thereof.

## Claims

1. A control device (310) for a converter (120), comprising:
a touchscreen (311) adapted to provide a human-machine interface;
a communication adapter plate (313) connected to the touchscreen via a first interface (3131), the touchscreen communicating with the communication adapter plate using a first communication protocol; and
a PLC control device (312) adapted to control the converter and comprising:
a PLC unit (3121) connected to the communication adapter plate via a second interface (3132), and adapted to communicate with the communication adapter plate using a second communication protocol that is different from the first protocol and to perform external control on the converter; and
a control box (3122) connected to the communication adapter plate via a third interface (3134), and adapted to perform internal control on the converter;
wherein the communication adapter plate (313) is adapted to convert signals from the first communication protocol to the second communication protocol and signals from the second communication protocol to the first communication protocol.

2. The control device (310) according to claim 1, wherein the communication adapter plate (313) comprises:
the first interface (3131) being adapter to receive a first signal from the touchscreen (311) or transmit the first signal to the touchscreen using the first communication protocol;
the second interface (3132) being adapter to receive a second signal from the PLC control device (312) or transmit the second signal to the PLC control device using the second communication protocol; and
a conversion unit (3133) adapted to convert the first signal into the second signal, or convert the second signal into the first signal.

3. The control device (310) according to claim 1, wherein the PLC unit (3121) is further adapted to receive a sensing signal from an external sensor (150).

4. The control device (310) according to claim 1, wherein the communication adapter plate (313) comprises the third interface (3134) being adapted to selectively transmit the conversion result by the conversion unit to the control box (3122).

5. The control device (310) according to claim 4, wherein the third interface (3134) is an optical fiber interface.

6. The control device (310) according to claim 1, wherein the first communication protocol is MODBUS, and the second communication protocol is PPI.

7. The control device (310) according to claim 1, wherein the converter (120) is a high-voltage converter.

8. A control system (300), comprising:
a control device (310) according to any of claims 1 to 7;
a converter (120) that is controlled by the control device;
an actuating mechanism (130) that is controlled by the converter to actuate control of a controlled object (140); and
a sensor (150) adapted to sense the controlled object and transmit a resulting sensing signal to a PLC control device (312) in the control device.

9. The control system (300) according to claim 8, wherein the control system is a constant-pressure water supply system or a constant-pressure air supply system.

## Patentansprüche

1. Steuergerät (310) für einen Umsetzer (120), umfassend:
Berührungsbildschirm (311) dazu angepaßt eine Mensch-Maschine-Schnittstelle bereitzustellen;
Kommunikationsadapterplatte (313), die mit dem Berührungsbildschirm über eine erste Schnittstelle (3131) verbunden ist, und der Berührungsbildschirm unter Verwendung eines ersten Kommunikationsprotokolles mit der Kommunikationsadapterplatte in Verbindung steht; und
SPS-Steuereinheit (312) dazu angepaßt den Umsetzer zu steuern, umfassend:
SPS-Einheit (3121), die mit der Kommunikationsadapterplatte über eine zweite Schnittstelle (3132) verbunden ist, dazu angepaßt mit der Kommunikationsadapterplatte unter Verwendung eines zweiten Kommunikationsprotokolls, das von dem ersten Protokoll verschieden ist, in Verbindung zu stehen und an dem Umsetzer fremdgesteuerte Steuerung zu verrichten; und
Steuerkasten (3122), der mit der Kommunikationsadapterplatte über eine dritte Schnittstelle (3134) verbunden ist, dazu angepaßt interne Steuerung an dem Umsetzer zu verrichten, wobei die Kommunikationsadapterplatte (313) dazu angepaßt ist Signale von dem ersten Kommunikationsprotokoll in das zweite Kommunikationsprotokoll und Signale von dem zweiten Kommunikationsprotokoll in das erste Kommunikationsprotokoll umzuwandeln.

2. Steuergerät (310) nach Anspruch 1, wobei die Kommunikationsadapterplatte (313) umfaßt:
die erste Schnittstelle (3131) dazu angepaßt ein erstes Signal von dem Berührungsbildschirm (311) zu empfangen oder das erste Signal unter Verwendung des ersten Kommunikationsprotokolles zu dem Berührungsbildschirm zu übertragen;
die zweite Schnittstelle (3132) dahingehend angepaßt ein zweites Signal von der SPS-Steuereinheit (312) zu empfangen oder das zweite Signal unter Verwendung des zweiten Kommunikationsprotokolles zu der Steuereinheit zu übertragen; und
Umsetzungseinheit (3133) dazu angepaßt das erste Signal in das zweite Signal umzuwandeln, oder das zweite Signal in das erste Signal umzuwandeln.

3. Steuergerät (310) nach Anspruch 1, wobei die SPS-Einheit (3121) weiterhin dazu angepaßt ist ein Abtastsignal von einem externen Sensor (150) zu empfangen.

4. Steuergerät (310) nach Anspruch 1, wobei die Kommunikationsadapterplatte (313) umfaßt:
die dritte Schnittstelle (3134) dazu angepaßt wahlweise das Umwandlungsergebnis der Umsetzungseinheit zu dem Steuerkasten zu übertragen.

5. Steuergerät (310) nach Anspruch 4, wobei die dritte Schnittstelle (3134) eine Lichtwellenleiterschnittstelle ist.

6. Steuergerät (310) nach Anspruch 1, wobei das erste Kommunikationsprotokoll MODBUS ist und das zweite Kommunikationsprotokoll PPI ist.

7. Steuergerät (310) nach Anspruch 1, wobei der Umsetzer (120) ein Hochspannungsumsetzer ist.

8. Steuerungssystem (300), umfassend:
Steuergerät (310) nach einem der Ansprüche 1 bis 7;
Umsetzer (120), das durch das Steuergerät gesteuert wird;
Betätigungsmechanismus (130), das durch den Umsetzer gesteuert wird, die Steuerung eines gesteuerten Gegenstandes (140) zu betätigen; und
Sensor (150) dazu angepaßt den gesteuerten Gegenstand zu erfassen und ein resultierendes Meßsignal an eine SPS-Steuereinheit (312) in dem Steuergerät zu übertragen.

9. Steuerungssystem (300) nach Anspruch 8, wobei das Steuerungssystem ein Gleichdruck-Wasserversorgungssystem oder ein Gleichdruck-Luftversorgungssystem ist.

## Revendications

1. Dispositif de contrôle (310) pour un convertisseur (120), comprenant :
un écran tactile (311) adapté pour procurer une interface homme-machine ;
une plaque d'adaptateur de communication (313) connectée à l'écran tactile via une première interface (3131), l'écran tactile communiquant avec la plaque d'adaptateur de communication en utilisant un premier protocole de communication ; et
un dispositif de contrôle à automate programmable industriel API (312) adapté pour contrôler le convertisseur et comprenant :
une unité API (3121) connectée à la plaque d'adaptateur de communication via une deuxième interface (3132), et adaptée pour communiquer avec la plaque d'adaptateur de communication en utilisant un deuxième protocole de communication qui est différent du premier protocole et pour mettre en oeuvre un contrôle externe sur le convertisseur ; et
un boîtier de contrôle (3122) connecté à la plaque d'adaptateur de communication via une troisième interface (3134), et adapté pour mettre en oeuvre un contrôle interne sur le convertisseur ;
dans lequel la plaque d'adaptateur de communication (313) est adaptée pour convertir des signaux du premier protocole de communication dans le deuxième protocole de communication et des signaux du deuxième protocole de communication dans le premier protocole de communication.

2. Dispositif de contrôle (310) selon la revendication 1, dans lequel la plaque d'adaptateur de communication (313) comprend :
la première interface (3131), qui est adaptée pour recevoir un premier signal de l'écran tactile (311) ou pour transmettre le premier signal à l'écran tactile en utilisant le premier protocole de communication ;
la deuxième interface (3132), qui est adaptée pour recevoir un deuxième signal provenant du dispositif de contrôle d'API (312) ou pour transmettre le deuxième signal au dispositif de contrôle d'API en utilisant le deuxième protocole de communication ; et
une unité de conversion (3133), adaptée pour convertir le premier signal en le deuxième signal, ou pour convertir le deuxième signal en le premier signal.

3. Dispositif de contrôle (310) selon la revendication 1, dans lequel l'unité API (3121) est en outre adaptée pour recevoir un signal de détection provenant d'un capteur externe (150).

4. Dispositif de contrôle (310) selon la revendication 1, dans lequel la plaque d'adaptateur de communication (313) comprend la troisième interface (3134), qui est adaptée pour transmettre sélectivement au boîtier de contrôle (3122) le résultat de conversion produit par l'unité de conversion.

5. Dispositif de contrôle (310) selon la revendication 4, dans lequel la troisième interface (3134) est une interface à fibre optique.

6. Dispositif de contrôle (310) selon la revendication 1, dans lequel le premier protocole de communication est un protocole MODBUS, et le deuxième protocole de communication est un protocole PPI.

7. Dispositif de contrôle (310) selon la revendication 1, dans lequel le convertisseur (120) est un convertisseur à haute tension.

8. Système de contrôle (300), comprenant :
un dispositif de contrôle (310) selon l'une quelconque des revendications 1 à 7 ;
un convertisseur (120) qui est contrôlé par le dispositif de contrôle ;
un mécanisme d'actionnement (130) qui est contrôlé par le convertisseur pour effectuer un contrôle d'un objet contrôlé (140) ; et
un capteur (150) adapté pour détecter l'objet contrôlé et transmettre un signal de détection résultant à un dispositif de contrôle d'API (312) dans le dispositif de contrôle.

9. Système de contrôle (300) selon la revendication 8, dans lequel le système de contrôle est un système d'alimentation d'eau à pression constante ou un système d'alimentation d'air à pression constante.
